# EUROPEAN PATENT APPLICATION

(11) **EP 1 501 225 A2**
(43) Date of publication of application: **26.01.2005**
(21) Application number: 04016821.3
(22) Date of filing: 16.07.2004
(51) Int. Cl.: H04J 14/02

(54) **System and method for communicating optical traffic between ring networks**

(30) Priority: 25.07.2003 US 627548
(71) Applicant: FUJITSU LIMITED, Kawasaki-shi, Kanagawa 211-8588 (JP)
(72) Inventor: Aoki, Yasuhiko, Plano, Texas 75025-2449 (US); Takeguchi, Koji, Kawasaki Kanagawa 213-0012 (JP); Kinoshita, Susumu, Plano, TX 75024 (US)
(74) Representative: HOFFMANN - EITLE

(57) **Abstract**

A system for communicating optical traffic between ring networks includes a first optical ring network and a second optical ring network. Each optical ring network is operable to communicate optical traffic comprising a plurality of wavelengths. The system includes a first ring interconnect (RIC) node and a second RIC node, and each RIC node is coupled to the first and second optical ring networks. The first RIC node is operable to communicate optical traffic between the first and second optical ring networks, and the second RIC node is operable to communicate optical traffic between the first and second optical ring networks when the first RIC node is unable to communicate optical traffic between the first and second optical ring networks. The second RIC node may be operable to determine when the first RIC node is unable to communicate optical traffic between the first and second optical ring networks.

## Description

### TECHNICAL FIELD OF THE INVENTION

This invention relates generally to the field of optical communication and, more specifically, to a system and method for communicating optical traffic between ring networks.

### BACKGROUND OF THE INVENTION

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth, or size of the channels.

The topology in which WDM and DWDM networks are built plays a key role in determining the extent to which such networks are utilized. Ring topologies are common in today's networks. WDM add/drop units serve as network elements on the periphery of such optical rings. By using WDM add/drop equipment at each network element (node), the entire composite signal can be fully demultiplexed into its constituent channels and switched (added/dropped or passed through). Such add/drop equipment can be used to drop traffic off an optical ring to one or more clients associated with the add/drop equipment. In addition, add/drop equipment can be used to communicate traffic from one optical ring to another optical ring. Current methods of communicating optical traffic from one ring network to another utilize multiplexing and demultiplexing with fixed channel spacing which limits flexibility in such communication.

### SUMMARY OF THE INVENTION

The present invention provides a system and method for communicating optical traffic between ring networks that substantially eliminates or reduces at least some of the disadvantages and problems associated with previous optical communication systems and methods.

In accordance with a particular embodiment of the present invention, a system for communicating optical traffic between ring networks includes a first optical ring network and a second optical ring network. Each optical ring network is operable to communicate optical traffic comprising a plurality of wavelengths. The system includes a first ring interconnect (RIC) node and a second RIC node, and each RIC node is coupled to the first and second optical ring networks. The first RIC node is operable to communicate optical traffic between the first and second optical ring networks, and the second RIC node is operable to communicate optical traffic between the first and second optical ring networks when the first RIC node is unable to communicate optical traffic between the first and second optical ring networks.

The second RIC node may be operable to determine when the first RIC node is unable to communicate optical traffic between the first and second optical ring networks. The first RIC node may be operable to receive optical traffic from the first optical ring network and passively pass through a first copy of the optical traffic along the first optical ring. The first RIC node may also be operable to drop a second copy of the optical traffic, select one or more wavelengths of the dropped optical traffic and communicate the one or more wavelengths to the second optical ring network. The second RIC node may be operable to determine when the first RIC node is unable to communicate optical traffic between the first and second optical ring networks, receive the first copy of the optical traffic from the first RIC node and passively pass through a third copy of the optical traffic along the first optical ring. The second RIC node may also be operable to drop a fourth copy of the optical traffic, select one or more wavelengths of the dropped optical traffic and communicate the one or more wavelengths to the second optical ring network when the first RIC node is unable to communicate optical traffic between the first and second optical ring networks.

In accordance with another embodiment, a method for communicating optical traffic between ring networks includes communicating optical traffic comprising a plurality of wavelengths through a first optical ring network and through a second optical ring network and communicating optical traffic between the first and second optical ring networks at a first RIC node. The method also includes communicating optical traffic between the first and second optical ring networks at a second RIC node when the first RIC node is unable to communicate optical traffic between the first and second optical ring networks.

Technical advantages of particular embodiments of the present invention include a system and method for communicating optical traffic between ring networks that provides drop and continue protection, flexible interconnect capacity and channel spacing flexibility between the ring networks. These functions reduce configuration and operation costs and increase network efficiency.

Another technical advantage of particular embodiments of the present invention includes ring interconnection nodes configured to provide protection in the event of power loss, fiber cut or other error. Accordingly, system operation and efficiency is improved since network downtime for component or other failure is decreased.

Other technical advantages will be readily apparent to one skilled in the art from the figures, descriptions and claims included herein. Moreover, while specific advantages have been enumerated above, various embodiments may include all, some or none of the enumerated advantages.

### BRIEF DESCRIPTION OF THE DRAWINGS

For a more complete understanding of particular embodiments of the invention and their advantages, reference is now made to the following descriptions, taken in conjunction with the accompanying drawings, in which:
FIGURE 1 illustrates a system for optical ring network interconnection, in accordance with one embodiment of the present invention;
FIGURE 2 illustrates a system for optical ring network interconnection illustrating components of ring interconnect nodes, in accordance with an embodiment of the present invention;
FIGURES 3A-3B illustrate ring interconnect nodes with different types of wavelength select units for communicating traffic between optical ring networks, in accordance with an embodiment of the present invention;
FIGURES 4A-4E illustrate particular types of wavelength select units, in accordance with embodiments of the present invention;
FIGURES 5A-5B illustrate additional types of wavelength select units, in accordance with other embodiments of the present invention;
FIGURES 6A-6B illustrate other types of wavelength select units that include a wavelength selective switch, in accordance with yet additional embodiments of the present invention;
FIGURES 7A-7B illustrate other types of wavelength select units that include a wavelength blocker, in accordance with additional embodiments of the present invention;
FIGURES 8A-8B illustrate systems for communicating traffic from one optical ring network to another utilizing ring interconnect node protection, in accordance with particular embodiments of the present invention;
FIGURE 9 illustrates a rejection block that may be used in particular embodiments of the present invention;
FIGURE 10 illustrates a system for communicating traffic from an origin node to a destination node utilizing ring interconnect node protection, in accordance with an embodiment of the present invention;
FIGURE 11 illustrates a system for communicating traffic from an origin node to a destination node utilizing ring interconnect node protection, in accordance with another embodiment of the present invention; and
FIGURE 12 is a flowchart illustrating a method for communicating optical traffic between ring networks, in accordance with an embodiment of the present invention.

### DETAILED DESCRIPTION OF THE INVENTION

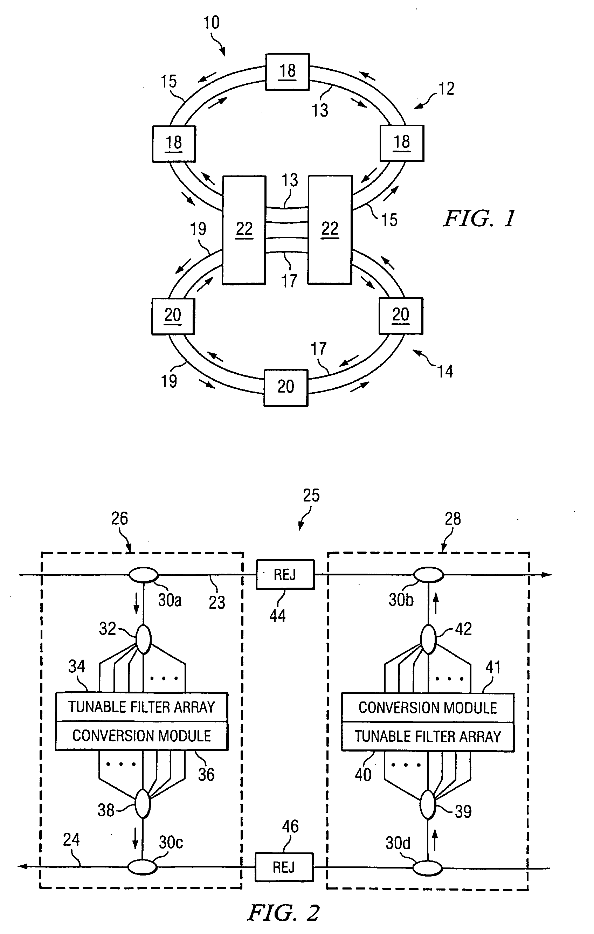

FIGURE 1 is a block diagram illustrating a system 10 in accordance with one embodiment of the present invention. In accordance with this embodiment, system 10 includes optical ring networks 12 and 14. An optical ring network may include, as appropriate, a single, unidirectional fiber, a single, bi-directional fiber, or a plurality of uni- or bi-directional fibers. In the illustrated embodiment, optical ring networks 12 and 14 each include a pair of unidirectional fibers, each transporting traffic in opposite directions. Specifically, optical ring network 12 includes a first fiber, or ring, 13 and a second fiber, or ring, 15. Optical ring network 14 includes a first fiber, or ring, 17 and a second fiber, or ring, 19. Rings 13 and 15 connect a plurality of add/drop nodes (ADNs) 18 and ring interconnect (RIC) nodes 22, and rings 17 and 19 connect a plurality of ADNs 20 and RIC nodes 22. System 10 is an optical network system in which a number of optical channels are carried over a common path in disparate wavelengths/channels. Optical networks of system 10 may be wavelength division multiplexing (WDM), dense wavelength division multiplexing (DWDM) or other suitable multi-channel networks. Optical networks of system 10 may be used as short-haul metropolitan networks, long-haul inter-city networks, or any other suitable network or combination of networks.

Optical information signals are transmitted in different directions on rings 13 and 15 of optical ring network 12 and in different directions on rings 17 and 19 of optical ring network 14. The optical signals have at least one characteristic modulated to encode audio, video, textual, real-time, non-real-time and/or other suitable data. Modulation may be based on phase shift keying (PSK), intensity modulation (IM) and other suitable methodologies.

In the illustrated embodiment, the rings 13 and 17 are clockwise rings in which traffic is transmitted in a clockwise direction. Rings 15 and 19 are counterclockwise rings in which traffic is transmitted in a counterclockwise direction. ADNs 18 are each operable to passively add and drop traffic to and from rings 13 and 15, and ADNs 20 are each operable to passively add and drop traffic to and from rings 17 and 19. In particular, each ADN 18 receives traffic from local clients and adds that traffic to rings 13 and 15. At the same time, each ADN 18 receives traffic from rings 13 and 15 and drops traffic destined for the local clients. Each ADN 20 operates in a like manner with respect to the adding and dropping of traffic to and from rings 17 and 19. As used throughout this description and the following claims, the term "each" means every one of at least a subset of the identified items.

RIC nodes 22 are each operable to add and drop traffic to and from optical ring networks 12 and 14. As an example, each RIC node 22 may drop traffic from ring 13 of optical ring network 12 and add such traffic to ring 17 of optical ring network 14 and vice versa. Each RIC node 22 may also drop traffic from ring 15 of optical ring network 12 and add such traffic to ring 19 of optical ring network 14 and vice versa. Such adding and dropping of traffic through RIC nodes 22 may be accomplished either passively or actively. "Passively" in this context means the adding or dropping of channels without power, electricity and/or moving parts. An active device would thus use power, electricity or moving parts to perform work. In a particular embodiment of the present invention, traffic may be passively added to and/or dropped from the rings by splitting/combining, which is without multiplexing/demultiplexing, in the transport rings and/or separating parts of a signal in the ring.

The use of two RIC nodes 22 provides protection for system 10 in the event that there is an error with the ability of one RIC node 22 to effectively communicate traffic from one optical ring network to another. For example, in operation one RIC node 22 may act as a primary RIC node and may add or drop traffic between optical ring networks 12 and 14 while the other RIC node 22 may act as a secondary RIC node. The secondary RIC node may wait until there is an error with the primary RIC node before adding or dropping any traffic between optical ring networks 12 and 14. The secondary RIC node may also begin adding and dropping traffic between the optical ring networks in other situations, such as in the event of a fiber cut to one of rings 13, 15, 17 and 19. RIC nodes 22, as well as ADNs 18 and 20, may continue to circulate on a ring traffic, such as particular channels of data, that is added to or dropped from that particular ring.

Signal information such as wavelengths, power and quality parameters may be monitored in ADNs 18 and 20, RIC nodes 22 and/or by a centralized control system. Thus, ADNs 18 and 20 and RIC nodes 22 may provide for circuit protection in the event of a line cut or other interruption in one or more of the rings of optical ring networks 12 and 14. An optical supervisory channel (OSC) may be used by the nodes to communicate with each other and with the control system.

In particular embodiments, one or both of optical ring networks 12 and 14 may be Optical Unidirectional Path-Switched Ring (OUPSR) networks in which traffic sent from a first ADN 18 or 20 or RIC node 22 to a second ADN 18 or 20 or RIC node 22 is communicated from the first ADN 18 or 20 or RIC node 22 to the second ADN 18 or 20 or RIC node 22 over both rings of the particular optical ring network. The second ADN 18 or 20 or RIC node 22 may include components allowing the second node to select between the traffic arriving via both rings so as to forward to a local client(s) the traffic from the ring that has a lower bit error rate (BER), a more preferred power level, and/or any other appropriate and desirable characteristics. Alternatively, such components may select traffic from a designated ring unless that traffic falls below/above a selected level of one or more operating characteristics (in which case, traffic from the other ring may be selected). The use of such dual signals allows traffic to get from the first ADN 18 or 20 or RIC node 22 to the second ADN 18 or 20 or RIC node 22 over at least one of the rings of the particular optical ring network in the event of a line break or other damage to the other of the rings.

In other embodiments, one or both of optical ring networks 12 and 14 may be Optical Shared Path Protection Ring (OSPPR) networks in which one of the rings of the particular ring network may be used as a back-up communication or protection path in the event that communications on the other ring of the ring network are interrupted. When not being used in such a back-up capacity, the protection path may communicate other preemptable traffic, thus increasing the capacity of the optical ring network in such embodiments.

FIGURE 2 illustrates a system 25 for optical ring network interconnection, in accordance with an embodiment of the present invention. System 25 includes fiber optic rings 23 and 24. Ring 23 may be a part of one optical ring network while ring 24 may be a part of another optical ring network. Optical information signals are transmitted in different directions on rings 23 and 24. System 25 includes RIC nodes 26 and 28 which are each operable to add and drop traffic to and from rings 23 and 24. For example, at RIC node 26 traffic may be dropped from ring 23 and added to ring 24, and at RIC node 28 traffic may be dropped from ring 24 and added to ring 23. The traffic that is dropped and added is done so on a passive basis, and such traffic may also continue to circulate on the respective rings from which the traffic is dropped. In one embodiment, rings 23 and 24 may correspond to rings 15 and 19 of FIGURE 1, and RIC nodes 26 and 28 illustrate particular components of RIC nodes 22 of FIGURE 1.

System 25 includes optical couplers 30 which allow for the passive adding and dropping of traffic. Although couplers 30 are described, any other suitable components such as optical splitters may be used. For the purposes of this description and the following claims, the term "couple," "splitter," and "combiner" should each be understood to include any device which receives one or more input optical signals, and either splits or combines the input optical signal(s) into one or more output optical signals. Optical couplers 30a and 30d are 1 x 2 optical couplers that include one ingress lead and two egress leads. Optical couplers 30b and 30c are 2 x 1 optical couplers that include two ingress leads and one egress lead. Optical couplers 30a and 30d are operable to receive traffic through their respective ingress leads and distribute such traffic over both egress leads. Optical couplers 30b and 30c are operable to receive traffic through both of their ingress leads and distribute such traffic over their respective egress leads.

With respect to RIC node 26, optical coupler 30a receives traffic communicated on ring 23 and drops such traffic to a 1 x N coupler 32. Coupler 32 makes N copies of such traffic for a tunable filter array 34. In particular embodiments, the number N may correspond to the number of channels of traffic communicated on ring 23 that is desired to be added to ring 24. Tunable filter array 34 comprises N number of tunable filters, and each such tunable filter is implemented to allow a different channel to pass through the filter. The amount of traffic which may be dropped from ring 23 and added to ring 24 may increase by increasing the number of tunable filters utilized. The use of tunable filters may include channel amplification to aid in filtering out cross-talk between wavelengths adjacent those being communicated and power equalization between interconnected channels to ring 24. The information passing through tunable filter array 34 undergoes an OOO or OEO conversion and may undergo a wavelength conversion at conversion module 36. Such information arrives in N number of channels at N x 1 optical coupler 38. Optical coupler 38 combines the N channels and sends the combined channel traffic through its egress lead to optical coupler 30c where the traffic is added to ring 24.

RIC node 28 operates in a similar manner to RIC node 26, except that RIC node 28 drops traffic from ring 24 and adds traffic to ring 23. Optical coupler 30d receives traffic communicated on ring 24 and drops such traffic to a 1 x M optical coupler 39. Coupler 39 makes M copies of such traffic for a tunable filter array 40. Tunable filter array 40 comprises M number of tunable filters, and each such tunable filter is implemented to allow a different channel to pass through the filter. The information passing through tunable filter array 40 undergoes an OOO or OEO conversion and may undergo 'a wavelength conversion at conversion module 41. Such information arrives in M number of channels at M x 1 optical coupler 42. Optical coupler 42 combines the M channels and sends the combined channel traffic through its egress lead to optical coupler 30c where the traffic is added to ring 23.

Rejection blocks 44 and 46 are operable to reject and prevent particular wavelengths from passing on an optical ring. For example if traffic in a particular wavelength is to be added to optical ring 23 at RIC node 28, then rejection block 44 may block any traffic in such wavelength currently communicated on ring 23 to prevent interference with the traffic in such wavelength being added to ring 23 at RIC node 28.

System 25 provides drop and continue protection for traffic communicated between rings 23 and 24. Moreover, the interconnect capacity and channel spacing is flexible since it can be varied by changing the number of tunable filters utilized and/or the wavelengths that are passed by the tunable filters.

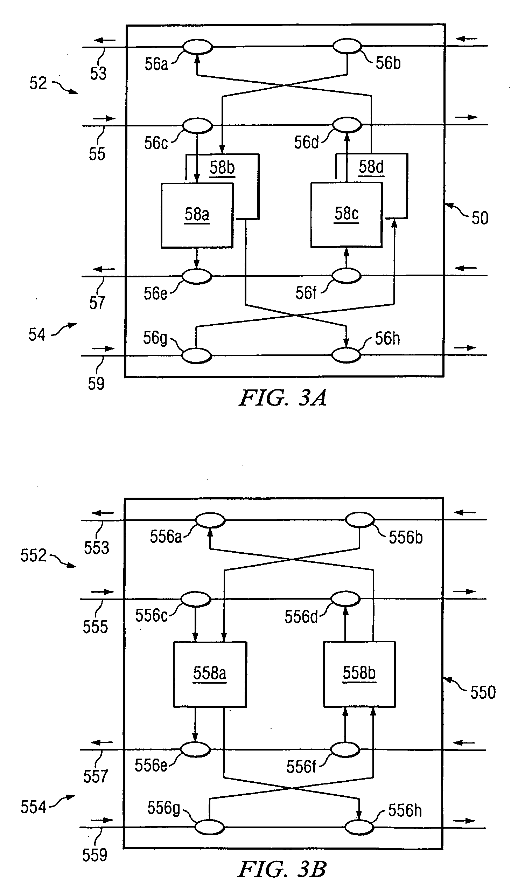

FIGURE 3A illustrates a RIC node 50 for communicating traffic between optical ring networks 52 and 54, in accordance with an embodiment of the present invention. RIC node 50 includes optical couplers 56 and wavelength select units (WSUs) 58. Optical ring network 52 includes rings 53 and 55 that communicate traffic over network 52 in different directions, and optical ring network 54 includes rings 57 and 59 that communicate traffic over network 54 in different directions. WSUs 58 may include passive or active components, or a combination thereof, such as optical couplers, tunable filters, multiplexers, demultiplexers, transponders, switches, routers or amplifiers. WSUs 58 select particular wavelengths of traffic communicated on one ring for addition to another ring. For example, traffic communicated on optical ring network 52 may include multiple channels, such as λ₁ - λ₄₀. It may be desired to add only particular channels of such traffic, for example λ₁ and λ₂ to optical ring network 54. In such situation, WSUs 58a and 58b may each select λ₁ and λ₂ for communication to optical ring network 54. WSUs 58 may also perform OOO/OEO conversion, aggregation and/or regeneration to one or more channels communicated from one optical ring network to another. RIC node 50 may also include other components, such as rejection blocks more fully discussed below to aid in protection schemes for the communication of traffic between optical ring networks.

Traffic is dropped from ring 55 of optical ring network 52 at optical coupler 56c and added to ring 57 of optical ring network 54 at optical coupler 56e. Such traffic passes through WSU 58a which selects particular wavelengths or channels of the traffic to be added to ring 57. Traffic is dropped from ring 53 of optical ring network 52 at optical coupler 56b and added to ring 59 of optical ring network 54 at optical coupler 56h after passing through WSU 58b. Traffic is dropped from ring 57 at coupler 56f and added to ring 55 at coupler 56d after passing through WSU 58c, and traffic is dropped from ring 59 at coupler 56g and added to ring 53 at coupler 56a after passing through WSU 58d.

FIGURE 3B illustrates a RIC node 550 for communicating traffic between optical ring networks 552 and 554, in accordance with an embodiment of the present invention. RIC node 550 includes optical couplers 556 and WSUs 558. RIC node 550 is different from RIC node 50 of FIGURE 3A in that WSUs 558 of RIC node 550 are 2 x 2 WSUs (2 input ports and 2 output ports) such that traffic may be received from one ring (for example, one of rings 553 and 555) and distributed to two rings (rings 557 and 559) as opposed to the 1 x 1 WSUs 58 of RIC node 50 of FIGURE 3A. Optical ring network 552 includes rings 553 and 555 that communicate traffic over network 552 in different directions, and optical ring network 554 includes rings 557 and 559 that communicate traffic over network 554 in different directions. WSUs 558 may include passive or active components, or a combination thereof, such as optical couplers, tunable filters, multiplexers, demultiplexers, transponders, switches, routers or amplifiers. RIC node 550 may also include other components, such as rejection blocks more fully discussed below to aid in protection schemes for the communication of traffic between optical ring networks.

Traffic dropped from ring 555 of optical ring network 552 at optical coupler 556c may be added to either or both of rings 557 and 559 of optical ring network 554 at optical couplers 556e and/or 556h. Such traffic passes through WSU 558a which selects particular wavelengths or channels of the traffic to be added to either or both of rings 557 and 559. Traffic dropped from ring 553 of optical ring network 552 at optical coupler 556b may be added to either or both of rings 557 and 559 of optical ring network 554 at optical couplers 556e and/or 556h after passing through WSU 558a. Traffic dropped from ring 557 at coupler 556f may be added to either or both of rings 553 and 555 at couplers 556 and/or 556d after passing through WSU 558b, and traffic dropped from ring 559 at coupler 556g may be added to either or both of rings 553 and 555 at coupler 556a and/or 556d after passing through WSU 558b.

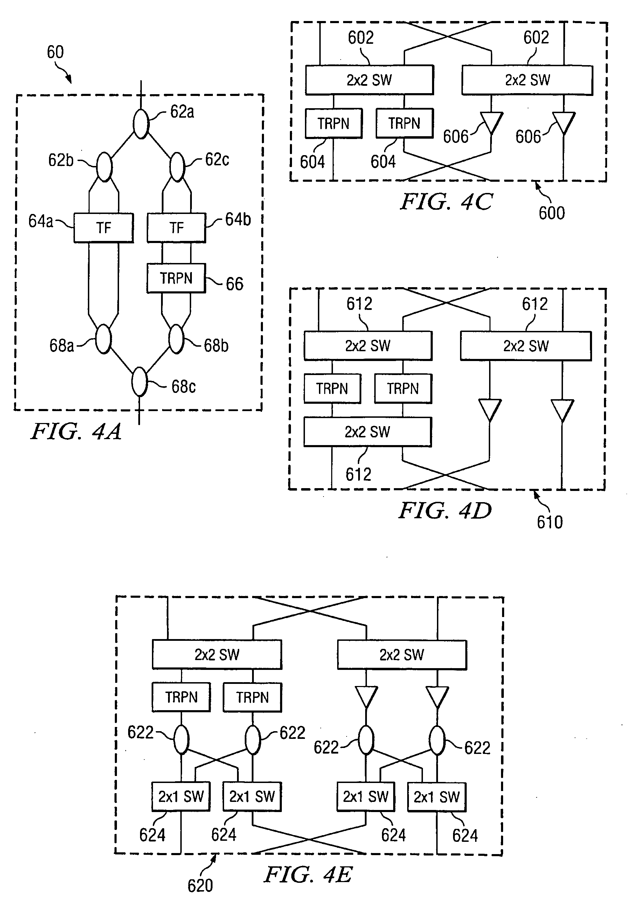

FIGURE 4A illustrates a WSU 60 for communication of particular wavelengths of traffic from one fiber optic ring to another, in accordance with an embodiment of the present invention. WSU 60 may be used as WSU 58 of FIGURE 3A in some embodiments. WSU 60 includes 1 x 2 optical couplers 62, tunable filter arrays 64, transponder 66 and 2 x 1 optical couplers 68. Traffic may be received from a fiber optic ring at coupler 62a which copies such traffic into two traffic streams. Couplers 62b and 62c, in combination, produce four streams of such traffic. Tunable filter arrays 64 include one or more tunable filters that each pass through a particular wavelength of such traffic. Since tunable filter arrays 64 in the illustrated embodiment collectively receive four streams of such traffic, the filter arrays may pass through four different wavelengths of the traffic. In the illustrated embodiment, tunable filter array 64a includes two tunable filters, and tunable filter array 64b includes two tunable filters for such pass through. Tunable filter array 64a forwards traffic directly to coupler 68a, and tunable filter array 64b forwards traffic to a transponder. Transponder 66 may perform wavelength conversion, aggregation and/or regeneration to the two wavelengths received from tunable filter array 64b. For example, if tunable filter array 64b allows wavelengths λ₃ and λ₄ to pass through, then transponder 66 may convert such wavelengths to wavelengths λ₅ and λ₆, respectively. The wavelength traffic egressing from each of filter array 64a and transponder 66 is combined at couplers 68a and 68b, respectively, into two traffic streams and further combined at coupler 68c into a single traffic stream to be added onto a fiber optic ring. Thus, WSU 60 is configured to add four wavelengths of traffic from a fiber optic ring of one optical ring network to a fiber optic ring of another optical ring network, two of which may be regenerated, aggregated and/or wavelength converted. WSUs in accordance with other embodiments may add a different number of wavelengths from one ring to another by changing the number or type of components included in the WSUs.

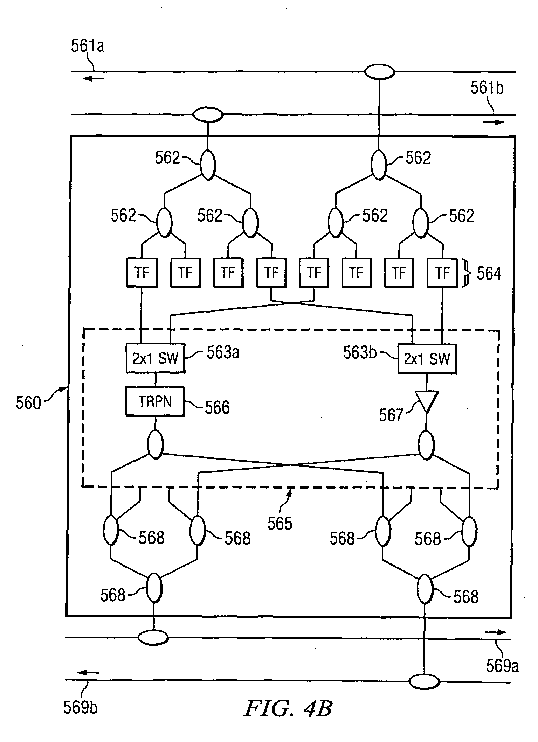

FIGURE 4B illustrates a WSU 560 for communication of particular wavelengths of traffic from two fiber optic rings 561 to two fiber optic rings 569, in accordance with another embodiment of the present invention. WSU 560 may be used as 2 x 2 WSU 558 of FIGURE 3B in some embodiments. WSU 560 includes 1 x 2 optical couplers 562, tunable filters 564, switch module 565, 2 x 1 optical switches 563, transponder 566, amplifiers 567 and 2 x 1 optical couplers 568. Traffic may be received from fiber optic rings 561 at couplers 562 which produce eight traffic streams. Tunable filters 564 each may pass through a particular wavelength of such traffic. Traffic passing through tunable filters 564 enters switch module 565 and 2 x 1 optical switches 563 of module 565.

While only two switches 563 are illustrated for convenience, it should be understood that switch module 565 may include additional switches 563 to receive traffic from the tunable filters 564 not currently illustrated as connected to a switch 563. Such additional switches 563 may be coupled to either a transponder 566 or an amplifier 567 such that traffic from each of rings 561 may be sent to both rings 569, either through a transponder or an amplifier.

Traffic exiting switch module 565 is combined at couplers 568 to be added onto fiber optic rings 569. As indicated above, in operation, WSU 560 may select traffic in a particular wavelength from one of rings 561 and add such traffic to both rings 569.

FIGURES 4C, 4D and 4E illustrate other types of switch modules which may be used in place of switch module 565 of FIGURE 4B. For example, switch module 600 of FIGURE 4C utilizes 2 x 2 optical switches 602, transponders and amplifiers 606 for added flexibility in the selection of traffic for passing from one or more rings to one or more additional rings using a WSU. Switch module 610 of FIGURE 4D utilizes an additional 2 x 2 optical switch 612 after the transponders for increased flexibility. Switch module 620 of FIGURE 4E utilizes additional couplers 622 and 1 x 2 optical switches 624 for even greater flexibility in the switching of traffic for selection and passing from one or more rings to one or more additional rings using a WSU. It should be understood that other types of switch modules with different configurations may be used in accordance with particular embodiments of the present invention depending on operational needs. For example, as discussed above with respect to switch module 565 of FIGURE 4B, switch modules 600, 610 and 620 of FIGURES 4C, 4D and 4E, respectively, may include additional switches and other components for coupling with the tunable filters 564 not currently illustrated as connected to a switch module in FIGURE 4B to further effect the purpose and flexibility of the module.

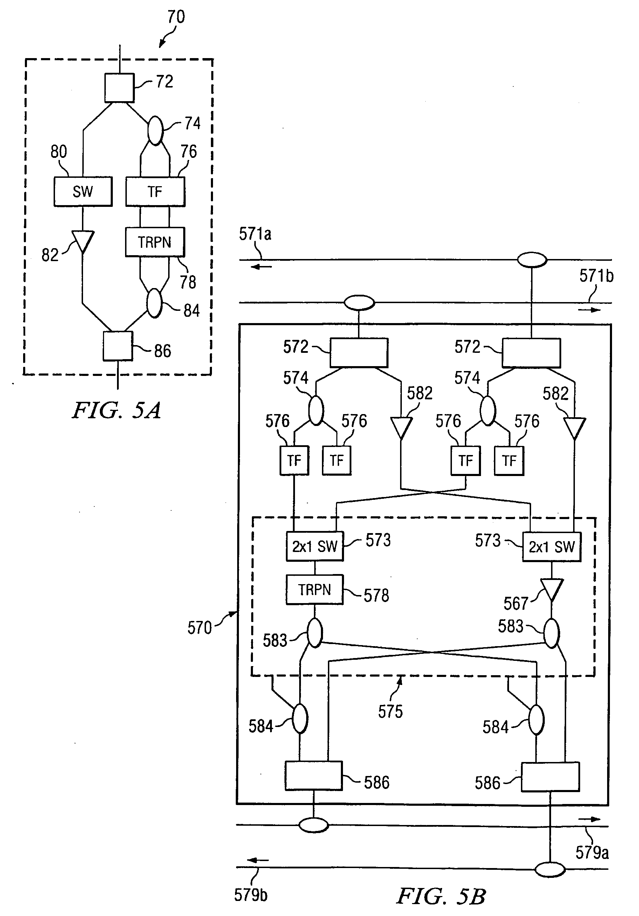

FIGURE 5A illustrates a WSU 70 for use in communicating particular wavelengths of traffic from one fiber optic ring to another, in accordance with another embodiment of the present invention. WSU 70 may be used as WSU 58 of FIGURE 3A in some embodiments. WSU 70 includes a band demultiplexer 72, 1 x 2 optical coupler 74, tunable filter array 76, transponder 78, switch 80, amplifier 82, 2 x 1 optical coupler 84 and band multiplexer 86. Band demultiplexer 72 separates particular sub-bands from traffic dropped from a fiber optic ring to WSU 70. One or more sub-bands separated by demultiplexer 72 pass to a 1 x 2 coupler 74, while others pass to a switch 80. Coupler 74 copies the sub-bands it receives into two traffic streams which are received by tunable filter array 76. Tunable filter array 76 passes through two different wavelengths of the traffic to transponder 78 which may perform wavelength conversion, aggregation and/or regeneration to the two wavelengths received. The wavelength traffic egressing from transponder 78 is combined at coupler 84. Switch 80 receives one or more sub-bands of channels from demultiplexer 72. Switch 80 comprises an on/off switch to selectively pass through the particular sub-bands received at the switch when desired. The sub-bands that pass through switch 80 are amplified at amplifier 82. The traffic egressing from amplifier 82 and coupler 84 is multiplexed at band multiplexer 86 for communication to a fiber optic ring.

FIGURE 5B illustrates a WSU 570 for use in communicating particular wavelengths of traffic from one fiber optic ring to another, in accordance with another embodiment of the present invention. WSU 570 may be used as 2 x 2 WSU 558 of FIGURE 3B in some embodiments. WSU 570 is similar to WSU 70 of FIGURE 5A, except that WSU 570 may receive traffic from one ring and distribute particular wavelengths to two rings. WSU 570 includes band demultiplexers 572, 1 x 2 optical couplers 574, tunable filters 576, amplifiers 582, switch module 575, 2 x 1 optical couplers 584 and band multiplexers 586. Traffic may be received from fiber optic rings 571 at band demultiplexers 572 and separated and distributed to switch module 575 either through couplers 574 and tunable filters 576 or through amplifiers 582. Traffic then enters 2 x 1 switches 573 of switch module 575. For convenience, only two 2 x 1 switches 573 are illustrated; however switch module 575 may include one or more additional 2 x 1 switches coupled to transponders to receive traffic from the tunable filters 576 not illustrated as being connected to a switch 573.

Traffic exiting switch module 575 eventually reaches one of multiplexers 586 for addition to rings 579. As indicated above, in operation WSU 570 may select traffic in particular wavelengths from one of rings 571 and add such traffic to both rings 579.

It should be understood that switch modules 600, 610 and 620 of FIGURES 4C, 4D and 4E, respectively, may be utilized in place of switch module 575 of FIGURE 5B. In such cases, the amplifiers of switch modules 600, 610 and 620 may be excluded. In addition, additional switches and other components may be used for coupling with the tunable filters 576 not currently illustrated as connected to a switch module in FIGURE 5B to further effect the purpose and flexibility of the particular module being used. Other types of switch modules with different configurations may be used in place of switch module 575 of WSU 570 depending on operational needs.

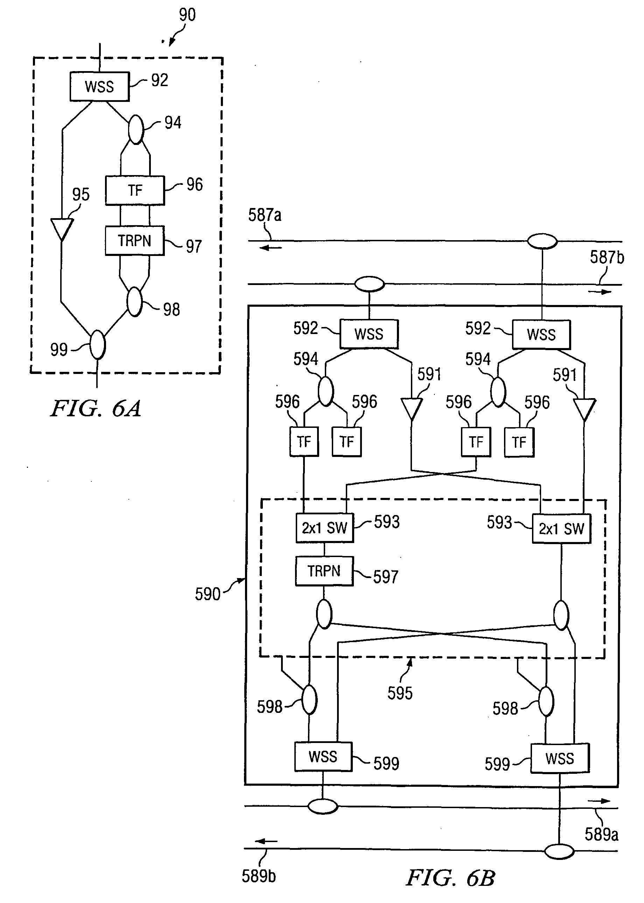

FIGURE 6A illustrates a WSU 90 for use in communicating particular wavelengths of traffic from one fiber optic ring to another, in accordance with another embodiment of the present invention. WSU 90 may be used as WSU 58 of FIGURE 3A in some embodiments. WSU 90 includes a wavelength selective switch (WSS) 92, a 1 x 2 optical coupler 94, tunable filter array 96, transponder 97, amplifier 95 and 2 x 1 optical couplers 98 and 99. WSS 92 selects particular wavelengths of traffic received at WSU 90 to pass through to coupler 94 and amplifier 95. Coupler 94 copies the wavelength traffic it receives into two traffic streams which are received by tunable filter array 96. Tunable filter array 96 passes through two different wavelengths of the traffic to transponder 97 which may perform wavelength conversion, aggregation or regeneration to the two wavelengths received. The wavelength traffic egressing from transponder 97 is combined at coupler 98 into one traffic stream. Amplifier 95 amplifies the particular wavelength traffic it receives from WSS. Such amplified traffic is received at coupler 99 which combines the amplified traffic with the traffic from coupler 98 into one traffic stream for communication to a fiber optic ring.

FIGURE 6B illustrates a WSU 590 for use in communicating particular wavelengths of traffic from one fiber optic ring to another, in accordance with another embodiment of the present invention. WSU 590 may be used as 2 x 2 WSU 558 of FIGURE 3B in some embodiments. WSU 590 is similar to WSU 90 of FIGURE 6A, except that WSU 590 may receive traffic from one ring and distribute particular wavelengths to two rings. WSU 590 includes WSSs 592, amplifiers 591, couplers 594, tunable filters 596, switch module 595, couplers 598 and WSSs 599. Traffic may be received from fiber optic rings 587 at WSSs 592 and distributed to switch module 595 either through couplers 594 and tunable filters 596 or through amplifiers 591. Traffic then enters 2 x 1 switches 593 of switch module 595. For convenience, only two 2 x 1 switches 593 are illustrated; however switch module 595 may include one or more additional 2 x 1 switches coupled to transponders to receive traffic from the tunable filters 596 not illustrated as being connected to a switch 593.

Traffic exiting switch module 595 eventually reaches one of WSSs 599 for addition to rings 589. As indicated above, in operation WSU 590 may select traffic in particular wavelengths from one of rings 587 and add such traffic to both rings 589.

It should be understood that switch modules 600, 610 and 620 of FIGURES 4C, 4D and 4E, respectively, may be utilized in place of switch module 595 of FIGURE 6B. In such cases, the amplifiers of switch modules 600, 610 and 620 may be excluded. In addition, additional switches and other components may be used for coupling with the tunable filters 596 not currently illustrated as connected to a switch module in FIGURE 5B to further effect the purpose and flexibility of the particular module being used. Other types of switch modules with different configurations may be used in place of switch module 595 of WSU 590 depending on operational needs.

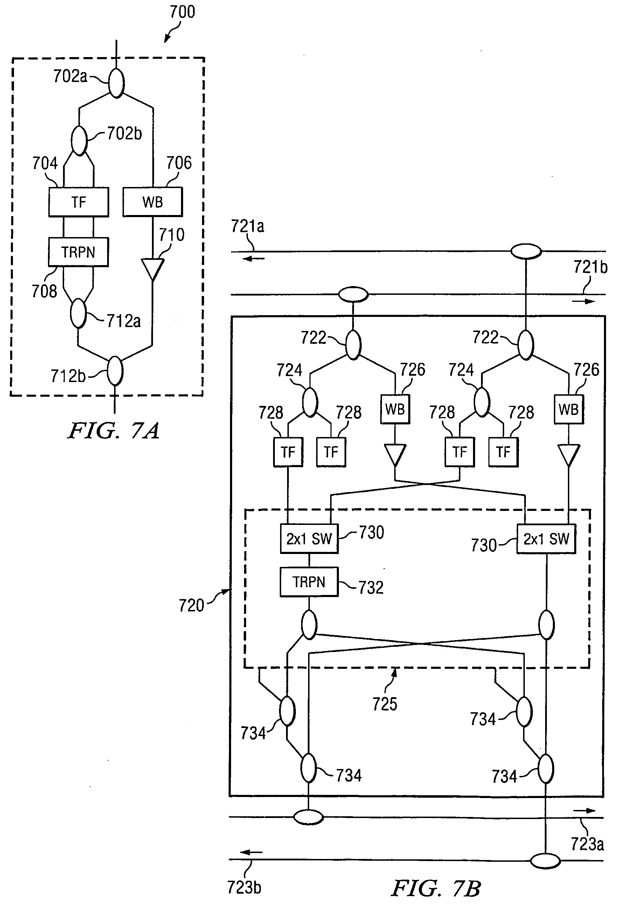

FIGURE 7A illustrates a WSU 700 for use in communicating particular wavelengths of traffic from one fiber optic ring to another, in accordance with another embodiment of the present invention. WSU 700 may be used as WSU 58 of FIGURE 3A in some embodiments. WSU 700 includes couplers 702 and 712, tunable filter array 704, transponder 708, wavelength blocker 706 and amplifier 710. Tunable filter array 704 passes through two different wavelengths of traffic dropped from a ring to transponder 708 which may perform wavelength conversion, aggregation and/or regeneration to the two wavelengths received. The wavelength traffic egressing from transponder 708 is combined at coupler 712a. Wavelength blocker 706 blocks particular wavelengths of traffic dropped from the fiber optic ring to WSU 70. The traffic that passes through wavelength blocker 706 is amplified at amplifier 710. The traffic egressing from amplifier 710 and coupler 712a is combined at coupler 712b for communication to a fiber optic ring.

FIGURE 7B illustrates a WSU 720 for use in communicating particular wavelengths of traffic from one fiber optic ring to another, in accordance with another embodiment of the present invention. WSU 720 may be used as 2 x 2 WSU 558 of FIGURE 3B in some embodiments. WSU 720 is similar to WSU 700 of FIGURE 7A, except that WSU 720 may receive traffic from one ring and distribute particular wavelengths to two rings. WSU 720 includes optical couplers 722 and 724, tunable filters 728, wavelength blockers 726, switch module 725 and optical couplers 734. Traffic may be received from fiber optic rings 721 at couplers 722 and distributed to switch module 725 either through couplers 724 and tunable filters 728 or through wavelength blockers 726 and the illustrated amplifiers. Traffic then enters 2 x 1 switches 730 of switch module 725. For convenience, only two 2 x 1 switches 730 are illustrated; however switch module 725 may include one or more additional 2 x 1 switches coupled to transponders to receive traffic from the tunable filters 728 not illustrated as being connected to a switch 730.

Traffic exiting switch module 725 is combined at couplers 734 for addition to rings 723. As indicated above, in operation WSU 720 may select traffic in particular wavelengths from one of rings 721 and add such traffic to both rings 723.

It should be understood that switch modules 600, 610 and 620 of FIGURES 4C, 4D and 4E, respectively, may be utilized in place of switch module 725 of FIGURE 7B. In such cases, the amplifiers of switch modules 600, 610 and 620 may be excluded. In addition, additional switches and other components may be used for coupling with the tunable filters 728 not currently illustrated as connected to a switch module in FIGURE 7B to further effect the purpose and flexibility of the particular module being used. Other types of switch modules with different configurations may be used in place of switch module 725 of WSU 720 depending on operational needs.

The WSUs illustrated and described herein incorporate particular components to control the type of traffic communicated from one fiber optic ring to another and the manner in which such traffic is communicated. WSUs in accordance with other embodiments may utilize any combination of these or other components for this purpose. For example, the number of wavelengths passing through the WSUs may change by changing the number and/or type of components.

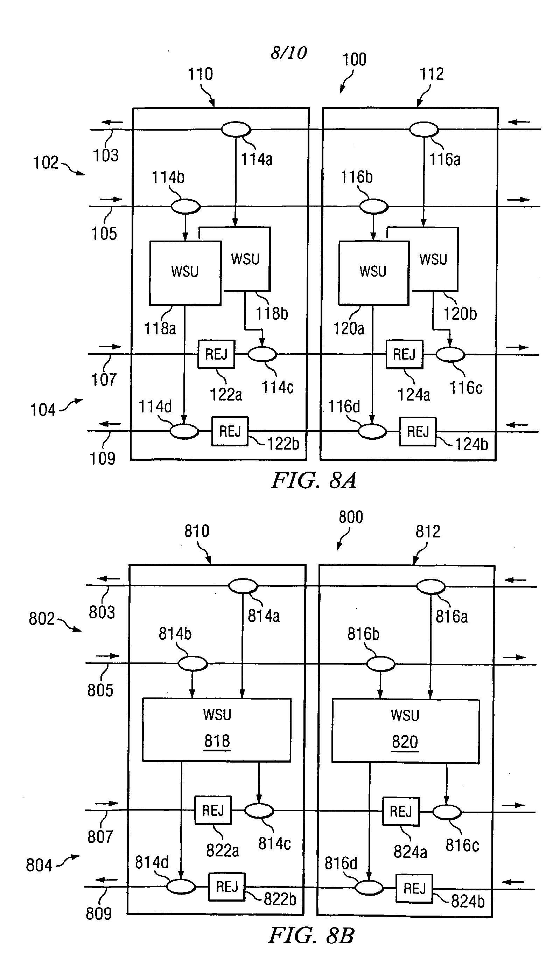

FIGURE 8A illustrates a system 100 for communicating traffic from optical ring network to another, in accordance with an embodiment of the present invention. System 100 includes optical ring networks 102 and 104. Optical ring network 102 includes rings 103 and 105 which communicate traffic in different directions, and optical ring network 104 includes rings 107 and 109 which communicate traffic in different directions. FIGURE 8A only illustrates particular components of system 100 for adding traffic from optical ring network 102 to optical ring network 104. System 100 may include other components for adding traffic from network 104 to network 102. For example, each RIC node may include an additional two WSUs and rejection blocks for adding traffic from network 104 to network 102.

System 100 includes RIC nodes 110 and 112. RIC node 110 includes optical couplers 114, WSUs 118 and rejection blocks 122; and RIC node 112 includes optical couplers 116, WSUs 120 and rejection blocks 124. In operation, one of RIC nodes 110 and 112 may act as a primary RIC node while the other acts as a secondary, or protection, RIC node. For example, if RIC node 110 is acting as a primary RIC node, then it may communicate traffic between optical ring networks 102 and 104 under normal operation. Traffic communicated on ring 103 is dropped at coupler 114a. Particular channels of such traffic are selected at WSU 118b, and such channels are added to ring 107 at coupler 114c. Similarly, traffic communicated on ring 105 is dropped by optical coupler 114b, particular channels of such traffic are selected at WSU 118a, and such channels are added to ring 109 at coupler 114d. Thus, when operational, RIC node 110 is able to add particular channels of traffic communicated on optical ring network 102 to optical ring network 104.

In a similar manner, when operational, RIC node 112 is able to add particular channels of traffic communicated on optical ring network 102 to optical ring network 104. If RIC node 112 is acting as a secondary RIC node, RIC node 112 will not become operational until there is an error or problem with the ability of traffic to be communicated from network 102 to network 104 by RIC node 110. Such an error may result from a problem with one or more components of RIC node 110 or from a fiber cut to an optical ring. In such situation, traffic communicated on ring 103 is dropped at coupler 116a, particular channels of such traffic are selected at WSU 120b, and such channels are added to ring 107 at coupler 116c. Similarly, traffic communicated on ring 105 is dropped by optical coupler 116b, particular channels of such traffic are selected at WSU 120a, and such channels are added to ring 109 at coupler 116d.

Rejection blocks 122 and 124 of RIC nodes 110 and 112, respectively, are able to prevent particular wavelengths of traffic from passing through. For example, if RIC node 110 adds traffic of a particular wavelength, for example λ₁, to optical ring network 104, then rejection blocks 122 may block λ₁ traffic from passing through such filters in order to prevent interference with the λ₁ traffic being added at couplers 114.

Rejection blocks 122 and 124 are also able to detect the presence of particular wavelengths of traffic in order to determine whether there is a problem or error with the ability of a RIC node to add traffic from one optical ring network to another. For example, if RIC node 110 is to act as a primary RIC node and RIC node 112 is to act as a secondary RIC node, then rejection blocks 124 of RIC node 112 can detect whether the particular traffic that is supposed to be added to rings 107 and 109 by RIC node 110 during normal operation is present on such rings. If rejection blocks 124 do not detect such traffic, then there may be a problem or error with RIC node 110. In such case, RIC node 112 may fulfill its role as a secondary, or protection, RIC node and begin to add such traffic to rings 107 and 109 because of the failure of RIC node 110 to do so.

FIGURE 8B illustrates a system 800 for communicating traffic from optical ring network to another, in accordance with an embodiment of the present invention. System 800 includes optical ring networks 802 and 804. Optical ring network 802 includes rings 803 and 805 which communicate traffic in different directions, and optical ring network 804 includes rings 807 and 809 which communicate traffic in different directions. FIGURE 8B only illustrates particular components of system 800 for adding traffic from optical ring network 802 to optical ring network 804. System 800 may include other components for adding traffic from network 804 to network 802. For example, each RIC node may include an additional WSU and rejection blocks for adding traffic from network 804 to network 802.

System 800 includes RIC nodes 810 and 812. RIC node 810 includes optical couplers 814, WSU 118 and rejection blocks 822; and RIC node 812 includes optical couplers 816, WSU 820 and rejection blocks 824. System 800 is similar to system 100 of FIGURE 8A; however RIC nodes 810 and 812 are different from RIC nodes 110 and 112 of FIGURE 8A in that RIC nodes 810 and 812 each include one 2 x 2 WSU instead of two 1 x 1 WSUs as included in RIC nodes 110 and 112 of system 100 of FIGURE 8A. Thus, each WSU of each RIC node of system 800 is able to receive traffic from one ring and distribute such traffic to two rings.

In operation, one of RIC nodes 810 and 812 may act as a primary RIC node while the other acts as a secondary, or protection, RIC node. For example, if RIC node 810 is acting as a primary RIC node, then it may communicate traffic between optical ring networks 802 and 804 under normal operation. Traffic communicated on ring 803 is dropped at coupler 814a. Particular channels of such traffic are selected at WSU 818, and such channels may be added to either one or both of rings 807 and 809 at couplers 814c and/or 814d. Similarly, traffic communicated on ring 805 is dropped at optical coupler 814b, particular channels of such traffic are selected at WSU 818, and such channels may be added to either one or both of rings 807 and 809 at couplers 814c and/or 814d. Thus, when operational, RIC node 810 is able to add particular channels of traffic communicated on optical ring network 802 to optical ring network 804.

In a similar manner, when operational, RIC node 812 is able to add particular channels of traffic communicated on optical ring network 802 to optical ring network 804. If RIC node 812 is acting as a secondary RIC node, RIC node 812 will not become operational until there is an error or problem with the ability of traffic to be communicated from network 802 to network 804 by RIC node 810. Such an error may result from a problem with one or more components of RIC node 810 or from a fiber cut to an optical ring. In such situation, traffic communicated on ring 803 is dropped at coupler 816a, particular channels of such traffic are selected at WSU 820, and such channels may be added to either one or both of rings 807 and 809 at couplers 816c and/or 816d. Similarly, traffic communicated on ring 805 is dropped at optical coupler 816b, particular channels of such traffic are selected at WSU 820, and such channels may be added to either one or both of rings 807 and 809 at couplers 816c and/or 816d.

Rejection blocks 822 and 824 of RIC nodes 810 and 812, respectively, are able to prevent particular wavelengths of traffic from passing through. For example, if RIC node 810 adds traffic of a particular wavelength, for example λ₁, to optical ring network 804, then rejection blocks 822 may block λ₁ traffic from passing through such blocks to prevent interference with the λ₁ traffic being added at couplers 814.

Rejection blocks 822 and 824 are also able to detect the presence of particular wavelengths of traffic in order to determine whether there is a problem or error with the ability of a RIC node to add traffic from one optical ring network to another. For example, if RIC node 810 is to act as a primary RIC node and RIC node 812 is to act as a secondary RIC node, then rejection blocks 824 of RIC node 812 can detect whether the particular traffic that is supposed to be added to rings 807 and 809 by RIC node 810 during normal operation is present on such rings. If rejection blocks 824 do not detect such traffic, then there may be a problem or error with RIC node 810. In such case, RIC node 812 may fulfill its role as a secondary, or protection, RIC node and begin to add such traffic to rings 807 and 809 because of the failure of RIC node 810 to do so.

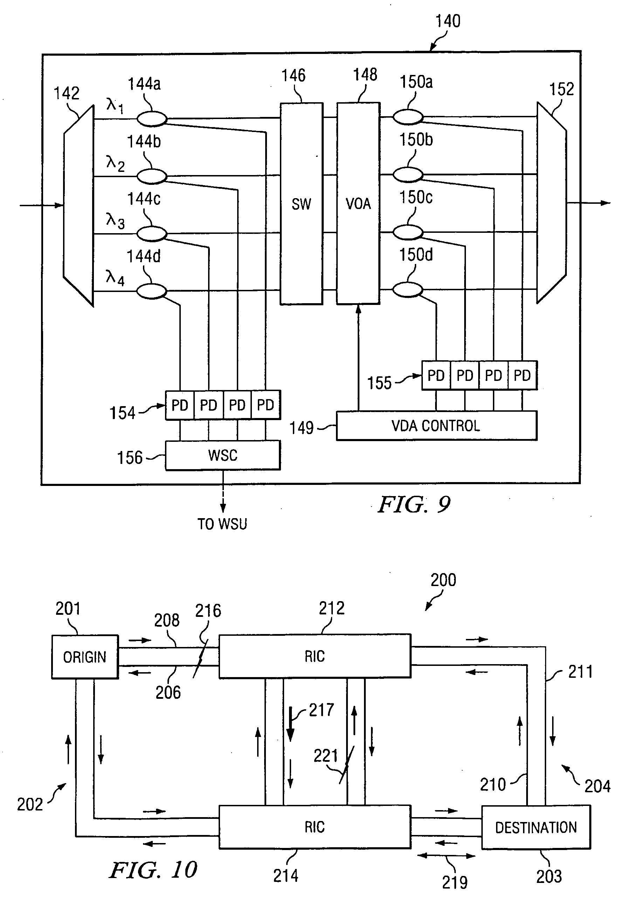

FIGURE 9 illustrates a rejection block 140 that may be used in particular embodiments of the present invention. Rejection block 140 includes a demultiplexer 142 that demultiplexes the channels of the incoming traffic. In the illustrated embodiment, the traffic includes four channels, λ₁ - λ₄, that are demultiplexed; however, other embodiments may include any other number of channels entering a rejection block. The traffic in each channel is passed through by an associated coupler 144. In the illustrated embodiment, couplers 144 also drop any traffic they receive (for example, λ₁, λ₂, λ₃ or λ₄) to a respective photo detector 154 which detects the presence of a particular channel stream. For example, if a primary RIC node of a system in which rejection block 140 is utilized is not performing an intended function of adding λ₁ traffic to an optical ring, then the photo detector 154 coupled to coupler 144a can detect that λ₁ traffic is not present because it will not receive λ₁ from coupler 144a. In such case, management software, embodied in the illustrated embodiment as a wavelength select control (WSC) 156, can communicate the lack of λ₁ traffic to a WSU so that the WSU may begin fulfilling a protection role of a RIC node in which it is included and may therefore add the λ₁ traffic to the optical ring as needed (for example, the WSC may turn on or active the WSU). In other embodiments, some channels may not include a photo detector for detecting traffic in that channel. There may not be a need for a coupler for those particular channels.

Switch 146 is an on/off switch that is able to prevent the passing of particular channels. For example, if it is desired for rejection block 140 to prevent λ₁ from passing through the block, then switch 146 may be turned on with respect to the λ₁ channel stream to prevent the passing of λ₁ traffic. Switch 146 includes a latching function that allows it to remain in a pass through state even if it loses power. Thus, upon power loss to a RIC node that includes rejection block 140, traffic reaching the rejection block along a particular optical ring may be passed through the rejection block along the optical ring. In particular embodiments, variable optical attenuator (VOA) 148 and VOA control 149 are used, in conjunction with couplers 150 and photodetectors 155, for power level adjustment between WDM channels. Particular embodiments may not include VOA 148, VOA control 149 and associated couplers 150 and photodetectors 155. The channel streams are multiplexed by multiplexer 152 onto one traffic stream for further communication on an optical ring.

FIGURE 10 illustrates a system 200 for communicating traffic from an origin node 201 to a destination node 203. System 200 includes optical ring networks 202 and 204. Optical ring network 202 includes rings 206 and 208, and optical ring network 204 includes rings 210 and 211. Optical ring networks 202 and 204 are both OUPSR optical ring networks such that traffic is communicated over both rings of each optical ring network. For example, traffic may be communicated in one direction on ring 206 and in an opposite direction over ring 208 of optical ring network 202. Likewise, traffic may be communicated in one direction over ring 210 and in the other direction over ring 211 of optical ring network 204.

In order to communicate traffic from origin node 201 to destination node 203, traffic on optical ring network 202 must be added to optical ring network 204. System 200 includes RIC nodes 212 and 214 for this purpose. RIC nodes 212 and 214 are both able to add traffic communicated on ring 206 to ring 210 and to add traffic communicated on ring 208 to ring 211. While the communication of traffic from origin node 201 to destination node 203 through the addition of traffic communicated on optical ring network 202 to optical ring network 204 is discussed herein, it should be understood that RIC nodes 212 and 214 are also able to add traffic communicated on ring 210 to ring 206 and to add traffic communicated on ring 211 to ring 208. RIC nodes 212 and 214 may include components such as WSUs to add only particular channels of traffic communicated on one optical ring network to another optical ring network.

In the illustrated embodiment, RIC node 212 operates as a primary RIC node, and RIC node 214 operates as a secondary RIC node. Because RIC node 214 operates as a secondary RIC node, it does not add traffic to rings 210 and 211 when RIC node 212 is adding traffic to such rings. This is the case because the WSUs of RIC node 214 are off or otherwise inactive to prevent such traffic from being added to rings 210 and 211. In other embodiments, RIC node 214 could operate as a primary node, and RIC node 212 could operate as a secondary RIC node. In such situation, RIC node 212 would not add traffic to rings 210 and 211 when RIC node 214 is adding traffic to such rings.

In operation, if a problem or error arises with the ability of RIC node 212 to effectively add traffic from rings 206 or 208 to rings 210 or 211, respectively, then RIC node 214 will recognize that RIC node 212 is not adding such traffic. Such recognition may be made by certain components of RIC node 214, such as one or more rejection blocks. The error with the ability of RIC node 212 to effectively add traffic may result from a malfunctioning WSU or other component problem, such as a loss of power. RIC node 214 will then begin adding traffic from rings 206 and 208 to rings 210 and 211, respectively, as protection. Thus, system 200 remains able to communicate traffic from origin node 201 to destination node 203 despite RIC node errors.

As discussed above with regard to other RIC nodes disclosed herein, because of the passive add/drop nature of RIC nodes 212 and 214 from the use of passive couplers within the RIC nodes and because rejection filters automatically pass traffic in the event of failure, each RIC node may continue to pass traffic through the optical ring network on which the traffic is being communicated even when the RIC node is unable to effectively add traffic from one optical ring network to another because of a malfunctioning WSU or otherwise.

In the event of a fiber cut to a segment of optical ring network 202, RIC node 212 will continue to add traffic from optical ring network 202 to optical ring network 204. For example, if there is a fiber cut 216 at segments of rings 206 and 208 directly connecting origin node 201 to RIC node 212, then RIC node 214 would not receive traffic on ring 208 normally passed by RIC node 212 to the segment directly between RIC node 212 and RIC node 214. In this situation, a continuous wave dummy signal 217 is received by RIC node 214 from RIC node 212 notifying RIC node 214 that RIC node 212 is still operational and that the reason RIC node 214 was not receiving the usual traffic on ring 208 was because of a fiber cut or other error on ring 208. Thus, because RIC node 212 was still operational, RIC node 214 would not need to become operational to fulfill its protection role. Traffic from origin node 201 would still reach destination node 203, because RIC node 212 would still receive such traffic on counterclockwise ring 206 and would add the traffic to ring 210 through which the traffic would be communicated to destination node 203.

In the event of an error with the ability of RIC node 212 to effectively add traffic from optical ring network 202 to optical ring network 204 in addition to fiber cut 216, then secondary RIC node 214 will not receive continuous wave dummy signal 217 from RIC node 212. RIC node 214 will thus recognize that RIC node 212 is not operational and will become operational to add traffic from optical ring network 202 to optical ring network 204 as discussed above.

In particular situations, RIC node 214 and destination node 203 may communicate over an optical supervisory channel (OSC) so that secondary RIC node 214 will know whether there is an error with RIC node 212 effectively adding traffic to optical ring network 204 thus resulting in the need for secondary RIC node 214 to add traffic to ring network 204. Such communication between destination node 203 and secondary RIC node 214 is represented in the illustrated embodiment by OSC link 219. As an example, if an error with the ability of RIC node 212 to add traffic from ring network 202 to ring network 204 exists in addition to a fiber cut 221 at the segment of ring 211 directly between RIC node 212 and RIC node 214 (without fiber cut 216), then destination node 203 may notify RIC node 214 through OSC link 219 that RIC node 214 needs to add traffic from optical ring network 202 to optical ring network 204. Thus, secondary RIC node 214 can determine when it needs to become operational as protection based on signals it receives from RIC node 212, components such as rejection blocks included in RIC node 214 and/or communication with destination node 203.

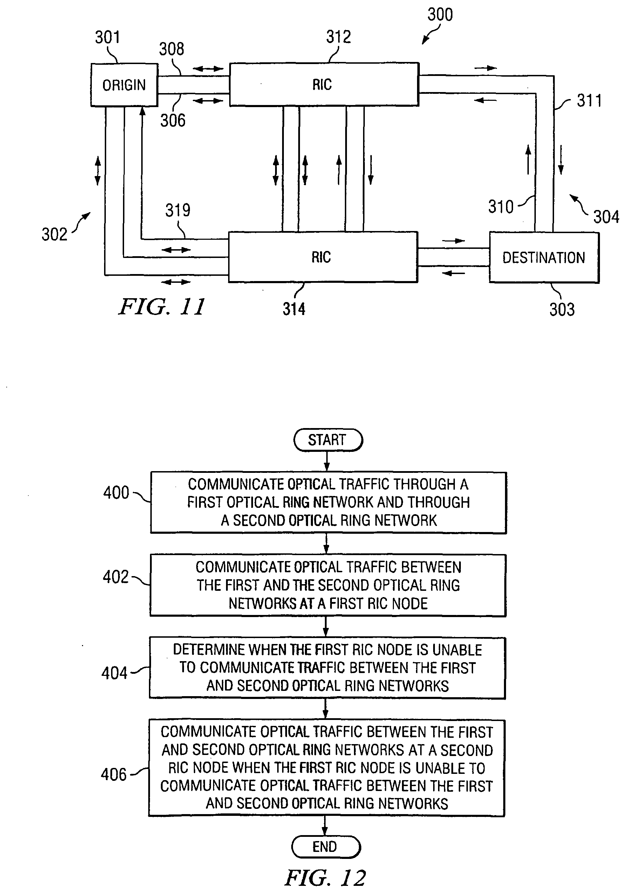

FIGURE 11 illustrates a system 300 for communicating traffic from an origin node 301 to a destination node 303. System 300 includes optical ring networks 302 and 304. Optical ring network 302 includes rings 306 and 308, and optical ring network 304 includes rings 310 and 311. Optical ring network 302 is an OSPPR optical ring network such that one ring, for example ring 306 in the illustrated embodiment, may be used as back-up communication path in the event that the other ring, for example ring 308 in the illustrated embodiment, is damaged. When not being used in such a back-up capacity, ring 308 may communicate other traffic, thus increasing the capacity of optical ring network 302. Optical ring network 304 is an OUPSR optical ring network such that the same traffic is communicated over both rings 310 and 311, for example in a clockwise direction over ring 311 and in a counterclockwise direction over ring 310.

In order to communicate traffic from origin node 301 to destination node 303, traffic on optical ring network 302 must be added to optical ring network 304. System 300 includes RIC nodes 312 and 314 for this purpose. While the communication of traffic from origin node 301 to destination node 303 through the addition of traffic communicated on optical ring network 302 to destination node 304 is discussed herein, it should be understood that RIC nodes 312 and 314 are also able to add traffic communicated on optical ring network 304 to optical ring network 302.

In the illustrated embodiment, RIC node 312 operates as a primary RIC node, and RIC node 314 operates as a secondary RIC node. In operation, if a problem or error arises with the ability of RIC node 312 to effectively add traffic from optical ring network 302 to optical ring network 304, then RIC node 314 will recognize that RIC node 312 is not adding such traffic. RIC node 314 will then begin adding traffic from network 302 to network 304 as protection so that traffic may be communicated from origin node 301 to destination node 303. In particular situations, because of a fiber cut or problem with the ability of RIC node 312 to pass traffic along ring 308 of ring network 302, RIC node 314 will not receive any traffic along ring 308 and may thus notify origin node 301 through OSC link 319 that origin node 301 must communicate the traffic to RIC node 314 over ring 306. RIC node 314 may then add such traffic to optical ring network 304 for communication to destination node 303. The protection methods and schemes discussed herein can also be applied to other network configurations, such as the communication of traffic from an origin node of an OUPSR network to a destination node of an OSPPR network. Such protection schemes may also be used when communicating traffic from one OSPPR network to another, for example by utilizing OSC links to notify an origination or other node of the inability of a RIC node to communicate traffic from one network to another.

Various protection methods have been discussed herein to protect against particular errors with the communication of traffic from one optical ring network to another, such as the use of rejection filters, a continuous wave dummy signal and communication over an OSC. Such errors have included both RIC node errors and fiber cuts. It should be understood that the protection methods generally discussed herein can be implemented to protect against other types of errors, such as fiber cuts in segments other than those illustrated. For example, with respect to particular optical ring network configurations, rejection blocks may be used in locations other than those illustrated to effect protection schemes for fiber cuts or RIC node errors. Moreover, other protection methods may be utilized so that a secondary RIC node can fulfill its protection role when needed.

FIGURE 12 is a flowchart illustrating a method for communicating optical traffic between ring networks, in accordance with an embodiment of the present invention. The method begins at step 400 where optical traffic is communicated through a first optical ring network and a second optical ring network. At step 402, optical traffic is communicated between the first and second optical ring networks at a first RIC node. At step 404, the inability of the first RIC node to communicated traffic between the first and second optical ring networks is determined. Such inability may result, for example, from a loss of power to the first RIC node or from a fiber cut at one of the optical ring networks. At step 406, optical traffic is communicated between the first and second optical ring networks at a second node when the first RIC node is unable to communicate optical traffic between the first and second optical ring networks.

Some of the steps illustrated in FIGURE 12 may be combined, modified or deleted where appropriate, and additional steps may also be added to the flowchart. Additionally, steps' may be performed in any suitable order without departing from the scope of the invention.

Although the present invention has been described in detail, various changes and modifications may be suggested to one skilled in the art. It is intended that the present invention encompass such changes and modifications as falling within the scope of the appended claims.

## Claims

1. A system for communicating optical traffic between ring networks, comprising;
a first optical ring network and a second optical ring network, each optical ring network operable to communicate optical traffic comprising a plurality of wavelengths;
a first ring interconnect (RIC) node and a second RIC node, each RIC node coupled to the first and second optical ring networks;
the first RIC node operable to communicate optical traffic between the first and second optical ring networks; and
the second RIC node operable to communicate optical traffic between the first and second optical ring networks when the first RIC node is unable to communicate optical traffic between the first and second optical ring networks.

2. The system of Claim 1, wherein the second RIC node is operable to determine when the first RIC node is unable to communicate optical traffic between the first and second optical ring networks.

3. The system of Claim 1, wherein the first RIC node is operable to:
receive optical traffic from the first optical ring network;
passively pass through a first copy of the optical traffic along the first optical ring;
drop a second copy of the optical traffic;
select one or more wavelengths of the dropped optical traffic; and
communicate the one or more wavelengths to the second optical ring network.

4. The system of Claim 3, wherein the second RIC node is operable to:
determine when the first RIC node is unable to communicate optical traffic between the first and second optical ring networks;
receive the first copy of the optical traffic from the first RIC node;
passively pass through a third copy of the optical traffic along the first optical ring;
drop a fourth copy of the optical traffic;
select one or more wavelengths of the dropped optical traffic; and
communicate the one or more wavelengths to the second optical ring network when the first RIC node is unable to communicate optical traffic between the first and second optical ring networks.

5. The system of Claim 1, wherein the first and second RIC nodes each comprise a wavelength select unit operable to select one or more wavelengths of optical traffic for communication between the first and second optical ring networks.

6. The system of Claim 5, wherein at least one wavelength select unit comprises a tunable filter array comprising a first number of tunable filters for passing a first number of wavelengths of optical traffic for communication between the first and second optical ring networks.

7. The system of Claim 5, wherein at least one wavelength select unit comprises a second number of switches for selectively forwarding a second number wavelengths of optical traffic for communication between the first and second optical ring networks.

8. The system of Claim 1, wherein the second RIC node is operable to communicate optical traffic between the first and second optical ring networks when the first RIC node is unable to perform such communication due to a failure of the first RIC node.

9. The system of Claim 1, wherein the second RIC node is operable to communicate optical traffic between the first and second optical ring networks when the first RIC node is unable to perform such communication due to a fiber cut to the first optical ring network.

10. The system of Clam 1, wherein the second RIC node comprises a rejection block operable to detect traffic of one or more wavelengths to determine when the first RIC node is unable to communicate optical traffic between the first and second optical ring networks.

11. A method for communicating optical traffic between ring networks, comprising;
communicating optical traffic comprising a plurality of wavelengths through a first optical ring network and through a second optical ring network;
communicating optical traffic between the first and second optical ring networks at a first ring interconnect (RIC) node;
communicating optical traffic between the first and second optical ring networks at a second RIC node when the first RIC node is unable to communicate optical traffic between the first and second optical ring networks.

12. The method of Claim 11, further comprising determining when the first RIC node is unable to communicate optical traffic between the first and second optical ring networks.

13. The method of Claim 11, further comprising:
receiving optical traffic from the first optical ring network at the first RIC node;
passively passing through a first copy of the optical traffic at the first RIC node along the first optical ring;
dropping a second copy of the optical traffic at the first RIC node;
selecting one or more wavelengths of the dropped optical traffic at the first RIC node; and
communicating the one or more wavelengths to the second optical ring network at the first RIC node.

14. The method of Claim 13, further comprising:
determining when the first RIC node is unable to communicate optical traffic between the first and second optical ring networks at the second RIC node;
receiving the first copy of the optical traffic from the first RIC node at the second RIC node;
passively passing through a third copy of the optical traffic at the second RIC node along the first optical ring;
dropping a fourth copy of the optical traffic at the second RIC node;
selecting one or more wavelengths of the dropped optical traffic at the second RIC node; and
communicating the one or more wavelengths to the second optical ring network at the second RIC node when the first RIC node is unable to communicate optical traffic between the first and second optical ring networks.

15. The method of Claim 11, further comprising selecting one or more wavelengths of optical traffic for communication between the first and second optical ring networks at a wavelength select unit of the first RIC node.

16. The method of Claim 15, further comprising filtering a first number of wavelengths of optical traffic for communication between the first and second optical ring networks at a tunable filter array of the wavelength select unit.

17. The method of Claim 15, further comprising selectively forwarding a second number wavelengths of optical traffic for communication between the first and second optical ring networks at a second number of switches of the wavelength select unit.

18. The method of Claim 11, wherein communicating optical traffic between the first and second optical ring networks at a second RIC node when the first RIC node is unable to communicate optical traffic between the first and second optical ring networks comprises communicating optical traffic between the first and second optical ring networks at a second RIC node when the first RIC node is unable to perform such communication due to a failure of the first RIC node.

19. The method of Claim 11, wherein communicating optical traffic between the first and second optical ring networks at a second RIC node when the first RIC node is unable to communicate optical traffic between the first and second optical ring networks comprises communicating optical traffic between the first and second optical ring networks at a second RIC node when the first RIC node is unable to perform such communication due to a fiber cut to the first optical ring network.

20. The method of Claim 11, further comprising detecting traffic of one or more wavelengths at a rejection block to determine when the first RIC node is unable to communicate optical traffic between the first and second optical ring networks.
